**Europäisches Patentamt**

**European Patent Office**

**Office européen des brevets**

(19)

(11) Veröffentlichungsnummer: **0 011 214**
**A1**

# (12) EUROPÄISCHE PATENTANMELDUNG

(21) Anmeldenummer: **79104318.5**

(22) Anmeldetag: **05.11.79**

(51) Int. Cl.³: **G 21 C 17/06**
**G 01 L 9/00**

(30) Priorität: **10.11.78 AT 8078/78**

(43) Veröffentlichungstag der Anmeldung:
**28.05.80 Patentblatt 80/11**

(84) Benannte Vertragsstaaten:
**AT BE CH DE FR GB IT LU NL SE**

(71) Anmelder: **INTERATOM Internationale
Atomreaktorbau GmbH
c/o Siemens AG Postfach 261
D-8000 München 22(DE)**

(72) Erfinder: **Fleck, Carl M., Prof. Dr.
Schüttelstrasse 115
A-1020 Wien(AT)**

(54) **Messvorrichtung in Kernreaktoren.**

(57) Es werden mehrere Vorrichtungen vorgeschlagen, mit denen Meßgrößen innerhalb eines gasdicht verschlossenen Brennstabes, insbesondere der Gasdruck, die Temperatur und die Leistung gemessen werden kann, ohne den Brennstab zu öffnen und ohne nach außen geführte Kabel oder Meßleitungen. Gemeinsames Prinzip dieser Vorrichtungen ist ein schwingungsfähiges System, bestehend aus einem festen Körper 1 und daran befestigten Federn 2 innerhalb einer Kapsel 8. Die Eigenfrequenz des Systems wird von der gewünschten Meßgröße verändert, beispielsweise in dem der Gasdruck innerhalb des Brennstabes die Länge eines Faltenbalges 6 verändert und dieser Faltenbalg 6 die Federn 2 mehr oder weniger zusammenpreßt. Die momentane Eigenfrequenz des Systems wird von außen berührungslos und ohne Kabel oder Meßleitungen gemessen, indem ein Sender in der Nähe des zu untersuchenden Brennstabes variable Frequenzen abgibt und bei Resonanz zwischen Sender und dem schwingungsfähigen System die momentane Frequenz des Senders festgehalten und ein Signal ausgelöst wird.

FIG 5

Croydon Printing Company Ltd.

INTERATOM                                        24.487.7 EUR

Internationale Atomreaktorbau GmbH

D-5060 Bergisch Gladbach 1


Meßvorrichtung in Kernreaktoren


Die Erfindung bezieht sich auf eine Vorrichtung
zur Messung von Meßgrößen insbesondere von Gasdruck,
Temperatur und Leistung, in Brennstäben von Kernreaktoren. Eine große Schwierigkeit beim Betrieb von Leistungsreaktoren und im besonderen bei schnellen
natriumgekühlten Brutreaktoren ist die Kerninstrumentierung. An eine Instrumentierung einzelner Brennelemente zur Überwachung der lokalen Leistung
oder Temperatur, des Gasdruckes als Kontrolle der
Intaktheit der Hülle oder als Abbrandmessung ist nicht
zu denken, da eine Ausführung von Kabel aus den einzelnen Brennstäben bei den entsprechenden Temperaturen
nicht die notwendige Zeitstandfestigkeit, bei den
hohen Strömungsgeschwindigkeiten nicht die entsprechende mechanische Festigkeit und bei der vorherrschenden Strahlungsleistung nicht die notwendige Widerstandsfestigkeit gegen korrosiven Angriff des Kühlmittels aufweisen würden. Abgesehen davon stellt die Go/Se 27.11.1979

Anwesenheit einer größeren Anzahl von Kabelsträngen
über dem Kern, die mit den Brennelementen fest verbunden sind, bei der Handhabung der Kernelemente eine
wesentliche Erschwernis dar. Bei den konventionellen
Leichtwasserreaktoren behalf man sich mit der Einführung von sogenannten instrumentierten Meßlanzen in
den Kern. Diese wurden von oben oder unten in den
fertig aufgebauten Kern eingeschoben und bei einer notwendigen Umladung vor dieser aus dem Kern entfernt.

Bei natriumgekühlten schnellen Brutreaktoren ist
so eine konstruktive Lösung wegen der großen Kompaktheit des Kerns nur schwer durchführbar. Bei den
bisherigen Demonstrationsreaktoren konnte wegen des
kleinen Kerns auf eine Kerninstrumentierung verzichtet und durch eine Außeninstrumentierung ersetzt
werden. Dies ist bei der nächsten Leistungsklasse
wegen der größeren Abmessungen des Kerns und wegen
seines geplanten heterogenen Aufbaues nicht mehr
durchführbar. Aufgabe der Erfindung ist es nun,
eine Vorrichtung anzugeben, die es gestattet, eine
drahtlose Abnahme mechanischer oder elektrischer
Meßgrößen aus instrumentierten Brennstäben bzw.
Brennelementen von Kernreaktoren durchzuführen.

Dies wird erfindungsgemäß dadurch erreicht, daß im
Brennstab ein schwingungsfähiges System angeordnet
ist, dessen Eigenfrequenz durch die zu messende
Größe verändert wird, und eine Vorrichtung zur Schwingungsanregung und Messung der Frequenz des Systems
vorgesehen ist.

Der Grundgedanke der Erfindung ist die Modulation
der Frequenz eines schwingungsfähigen Systems durch
die zu übertragende Meßgröße. Das schwingungsfähige
System kann von außen - etwa durch einen elektromagnetischen Sender oder durch Ultraschall - oder von innen
- etwa durch eine Thermospannung oder durch das vor
Ort vorhandene Schwingungsspektrum - zu Schwingungen
angeregt werden. Die gewünschte Meßgröße wirkt auf
die Eigenfrequenz (Resonanzfrequenz) des Systems
und kann so aus dem Brennstab drahtlos empfangen
werden. Die Übermittlung der gewünschten Meßgröße
kann auf diese Weise analog, das heißt proportional
zur Eigenfrequenz oder auch digital, das heißt bei
Über- oder Unterschreiten eines bestimmten Schwellwertes stattfinden. In diesem zweiten Fall wird die
Schwingung erst auftreten, wenn der erlaubte Bereich
der Meßgröße von dieser über- oder unterschritten
wird.

Die Feststellung einer Schwingung, bzw. deren Frequenz kann auf mehrfache Weise geschehen. Etwa durch
genaue Messung der vom Sender aufgenommenen elektrischen Leistung, während ein Frequenzbereich abgetastet wird. Im Bereich der Eigenfrequenz kann das schwingungsfähige System dem elektromagnetischen Wechselfeld
und damit dem Sender mehr Energie entnehmen. Die
Entnahme der Energie erfolgt entweder durch einen
mechanischen Schwinger aus einem permanent magnetischen Werkstoff, der zwischen Feder aufgehängt ist
und dessen Schwingfrequenz durch eine mechanische
Größe (etwa dem Gasdruck im Brennstab oder der Ausdehnung der Brennstofftabletten oder der Veränderung einer Bimetall-Feder) verstellt werden kann.

0011214

Ebenso ist es auch denkbar, daß durch elektrische
Signale, die etwa bei einer Temperaturmessung mittels
Thermoelemente anfallen oder durch Aufladung eines
Kondensators durch Spaltfragmente, ein elektronischer
Schwingkreis so verstimmt wird, daß er dem elektromagnetischen Feld bei einer ganz charakteristischen
Frequenz, die dem Meßsignal zugeordnet wird, Energie
entzieht.

Die Messung erfolgt dann so, daß über das betreffende
Brennelement eine Sendespule gefahren wird, in der
der Sender einen gewissen Frequenzbereich abtastet.
Kommen die mechanischen oder elektrischen Schwingsysteme oder Schwingkreise in Resonanz, so entziehen
sie dem Feld entsprechend mehr Energie und die Leistungsaufnahme des Senders wird ansteigen.

Die Eigenfrequenz kann aber auch dadurch gemessen
werden, daß das schwingungsfähige System durch Anregung bei der Resonanzfrequenz mit einer anderen
Frequenz ein Signal abstrahlt, das dann nur dazu
dient, die Frequenz des Senders festzulegen. Ebenso
ist es aber auch möglich, das System mit einer Frequenz anzuregen, die nicht der Resonanzfrequenz
entspricht. Die sich nach der Anregung einstellende
Schwingung liegt dadurch auf einer anderen Frequenz,
die dann unabhängig von der Erregerfrequenz gemessen
werden kann.

Es ist aber auch möglich, das schwingungsfähige
System durch kurze Sendeimpulse anzustoßen und den
Nachhall auf der gleichen oder einer anderen Frequenz
zu beobachten.

Die digitale Abnahme der Meßgröße ist so möglich, daß etwa der Schwinger durch eine Bimetallfeder, einen Elektromagneten oder eine durch den Gasdruck bewegte Vorrichtung am Schwingen gehindert wird, solange der Meßwert im erlaubten Bereich liegt. In diesem Fall kann die bei Überschreiten des erlaubten Bereichs auftretende Eigenfrequenz auch zur Kennzeichnung des Brennstabbündels benützt werden.

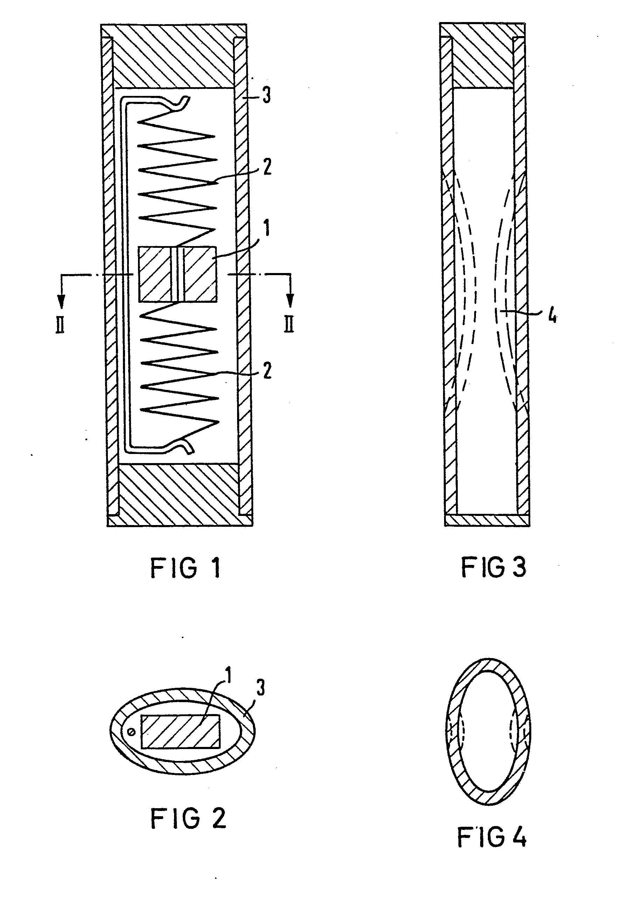

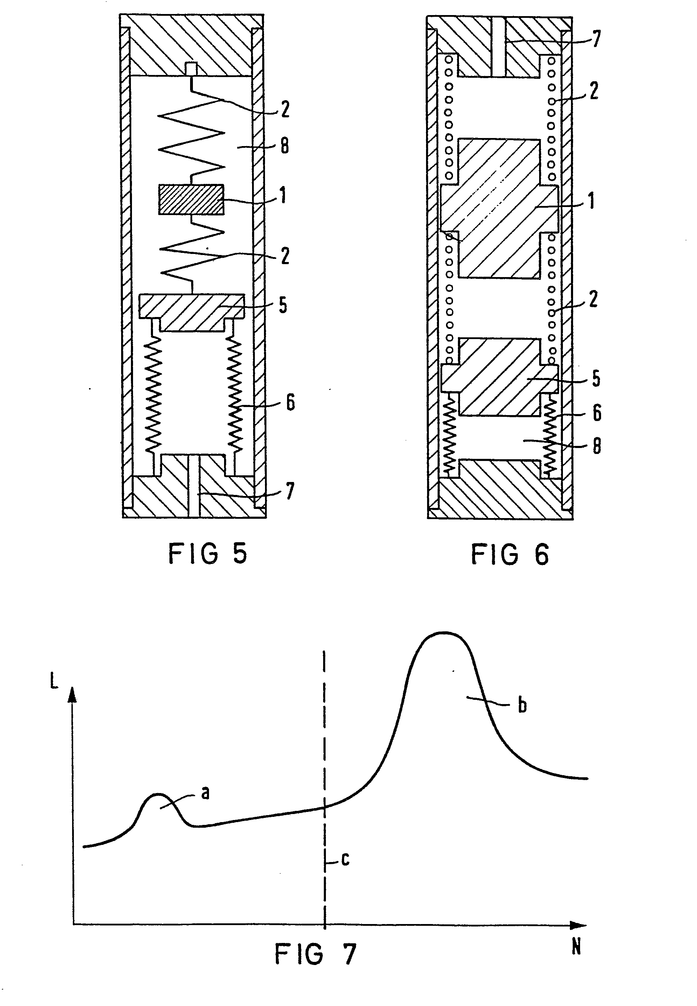

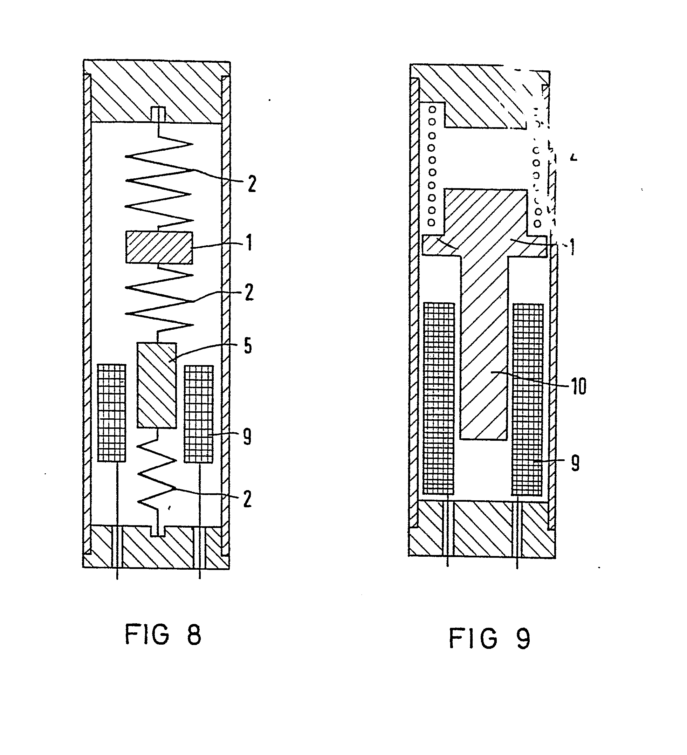

Die Erfindung wird nun näher unter Bezugnahme auf die Zeichnungen beschrieben. In den Zeichnungen zeigen: Fig. 1 eine Ausführungsform einer erfindungsgemäßen Meßvorrichtung; Fig. 2 einen Querschnitt längs der Linie II - II in Fig. 1; Fig. 3 eine schematische Ansicht eines Brennstabes, Fig. 4 einen Querschnitt des Brennstabes gemäß Fig. 3; die Fig. 5 und 6 weitere Ausführungsformen einer erfindungsgemäßen Vorrichtung, Fig. 7 ein Diagramm über die von der Frequenz abhängigen Leistungsaufnahme des Senders für ein defektes Brennelement; und die Fig. 8 und 9 zwei weitere Ausführungsformen der Erfindung. Fig. 1 zeigt eine Instrumentierung, die zum Nachweis und Auffinden defekter Brennstäbe dient. Ein Permanentmagnet 1 ist zwischen zwei Federn 2 so gespannt, daß er bei einer bestimmten Erregerfrequenz zu schwingen beginnt. Die Anordnung ist in einer Kapsel 3 gasdicht eingeschlossen, die so geformt ist (siehe Fig. 2), daß sie bei dem Gasdruck, der im intakten Brennstab herrscht, so weit deformiert wird (Fig. 3 und 4), daß sie durch ihre Deformation 4 den Schwinger 1 festhält. Tritt ein Brennelement-Schaden auf, so entweicht das Gas aus dem defekten Brennstab und der Schwinger wird aufgrund der Deformation 4 freigegeben.

0011214

Fig. 5 und 6 zeigen Instrumentierungsformen, die über den Nachweis defekter Brennelemente hinaus auch die Messung des Gasdruckes im Brennstab ermöglichen und damit Zusatzinformationen über den Abbrand als langzeitige Meßgröße bzw. Temperatur- und Leistungsschwingungen als kurzzeitige Meßgröße liefern. Der Schwinger 1 ist über Zug- oder Druckfedern 2 mit einem beweglichen Lager 5 verbunden, dessen Lage sich über einen Faltenbalg 6 und eine Öffnung 7 je nach äußerem Gasdruck und Innendruck des geschlossenen Teils 8 einstellt und so nach der Kennlinie der Federkraft eine druckabhängige Schwingfrequenz besitzt.

Fig. 7 zeigt die von der Frequenz ( $\nu$ ) abhängige Leistungsaufnahme L des Senders für ein defektes Brennelement, dessen Brennstäbe mit druckfedergelagerten Schwingern nach Anordnung der Fig. 5 instrumentiert sind. Man sieht die Leistungsaufnahme des Schwingers im drucklosen Brennstab bei niederen Frequenzen a und die Leistungsaufnahme der intakten Brennstäbe bei höheren Frequenzen b, die bei dem Druck des Spaltgases entsprechen und die ab einer Grenzfrequenz c unterbunden werden können.

Die Auslegung von Schwinger 1, Druckfeder 2 und Lager 5 in Fig. 5 und 6 kann so beschaffen sein, daß die Freigabe des Schwingers erst bei einem Defekt erfolgt, um die Eindeutigkeit der Messung nicht zu gefährden. Den damit freiwerdenden Bereich der Schwingungsfrequenzen kann man zur individuellen Kennzeichnung einzelner Brennstäbe verwenden, um ein Auffinden der defekten Brennstäbe während des Betriebes mit einem festen installierten Sender zu ermöglichen.

Fig. 8 und 9 zeigen zwei erfindungsgemäße Vorrichtungen für die Umsetzung einer elektrischen Größe über eine Spule 9 auf die Resonanzfrequenz eines Schwingers 1. Diese Umsetzung kann entweder über ein bewegliches Lager 5 erfolgen, das aus einem Weicheisenkern besteht und je nach Größe des Signals in die Spule 9 hineingezogen wird oder über eine wurmförmige Ausbildung 10 des Schwingers 1, die als Permanentmagnet, je nach Stärke des elektrischen Stromes, aus der Spule 9 herausgestoßen wird.

0011214

INTERATOM                                            24.487.7 EUR

Internationale Atomreaktorbau GmbH

D-5060 Bergisch Gladbach 1


Meßvorrichtung in Kernreaktoren


Patentansprüche


1. Vorrichtung zur Messung von Meßgrößen insbesondere
von Gasdruck, Temperatur und Leistung, in Brennstäben
von Kernreaktoren, dadurch gekennzeichnet, daß im
Brennstab ein schwingungsfähiges System angeordnet
ist, dessen Eigenfrequenz durch die zu messende Größe
verändert wird, und eine Vorrichtung zur Schwingungsanregung und Messung der Frequenz des Systems vorgesehen ist.


2. Vorrichtung nach Anspruch 1, dadurch gekennzeichnet,
daß dem schwingungsfähigen System eine Sperrvorrichtung zugeordnet ist, welche Schwingungen des Systems
unterbindet und erst nach Über- bzw. Unterschreiten
eines Schwellwertes der Meßgröße freigibt.

Go/Se 27.11.1979

3. Vorrichtung nach Anspruch 1 oder 2, dadurch gekennzeichnet, daß das schwingungsfähige System aus einem Permanentmagneten besteht, welcher an einer Feder oder zwischen zwei Federn schwingungsfähig gelagert ist.

4. Vorrichtung nach Anspruch 3, dadurch gekennzeichnet, daß die Federspannung und damit die Eigenfrequenz des schwingungsfähigen Systems durch die Meßgröße veränderbar ist.

5. Vorrichtung nach einem der Ansprüche 1 bis 4, dadurch gekennzeichnet, daß die Federkraft des schwingungsfähig aufgehängten Permanentmagneten durch einen Elektromagneten veränderbar ist.

6. Vorrichtung nach Anspruch 1, dadurch gekennzeichnet, daß das schwingungsfähige System aus einem elektrischen Schwingkreis besteht, dessen Eigenfrequenz durch die Meßgröße veränderbar ist.

7. Vorrichtung nach einem der Ansprüche 1 bis 6, dadurch gekennzeichnet, daß das schwingungsfähige System durch einen elektromagnetischen Sender mit vorzugsweise verstellbarer Sendefrequenz zu Schwingungen anregbar ist.

8. Vorrichtung nach einem der Ansprüche 1 bis 7, dadurch gekennzeichnet, daß die Frequenz des schwingungsfähigen Systems gemessen wird: 1) durch Messung der erhöhten Leistungsaufnahme des Senders oder 2) durch Messung eines abgestrahlten Signals des schwingungsfähigen Systems oder 3) durch Messung des Nachhalls des schwingungsfähigen Systems, wenn der Sender die Eigenfrequenz des schwingungsfähigen Systems sendet.

0011214

9. Vorrichtung nach einem der Ansprüche 1 bis 8, dadurch gekennzeichnet, daß das schwingungsfähige System mechanisch, vorzugsweise durch Ultraschall, zum Schwingen angeregt wird.

10. Vorrichtung nach einem der Ansprüche 1 bis 9, dadurch gekennzeichnet, daß das schwingungsfähige System durch das im Reaktorkern aus thermo-hydraulischen oder hydraulischen Gründen vorhandene Schwingungsspektrum angeregt wird.

11. Vorrichtung nach einem der Ansprüche 1 bis 10, dadurch gekennzeichnet, daß das schwingungsfähige System durch eine im Brennstab gebildete elektromotorische Kraft, etwa einer Thermospannung, zum Schwingen angeregt wird.

12. Vorrichtung nach einem der Ansprüche 1 bis 11, dadurch gekennzeichnet, daß die auftretende Eigenfrequenz oder das abgestrahlte Signal zur individuellen Kennzeichnung des Brennstabbündels benützt wird.

0011214

FIG 1

FIG 3

FIG 2

FIG 4

0011214

FIG 5

FIG 6

FIG 7

0011214

FIG 8

FIG 9

## EUROPÄISCHER RECHERCHENBERICHT

Europäisches Patentamt

0011214

Nummer der Anmeldung
EP 79 10 4318

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 452 368 (EXXON)<br>* Seite 4, Zeilen 2-23; Figuren 1-4 * | 1 |
| | -- | |
| | DE - A - 1 648 427 (DIEKMANN)<br>* Seite 2, a.b.c; Figuren * | 1,3,4,7 |
| | -- | |
| | US - A - 4 029 979 (CHAPIN)<br>* Zusammenfassung; Spalte 3, Zeilen 36-68; Spalte 4, Zeilen 1-20 * | 3,4 |
| | -- | |
| A | FR - A - 2 323 136 (K.G.N.-I.I.M.)<br>* Anspruch 1; Figuren 1-3 * | 1 |
| | -- | |
| A | FR - A - 2 394 073 (PANTIN)<br>* Anspruch 1; Figuren 1-5 * | 1 |
| | -- | |
| A | US - A - 3 927 369 (BILLETER)<br>* Zusammenfassung * | 1 |
| | -- | |
| A | FR - A - 1 440 370 (U.K.A.E.A.)<br>* Seite 1, rechte Spalte, letzter Absatz; Figuren 1,2 * | 1 |
| | ---- | |

**KLASSIFIKATION DER ANMELDUNG (Int.Cl. 3)**

G 21 C 17/06
G 01 L 9/00

**RECHERCHIERTE SACHGEBIETE (Int. Cl. 3)**

G 21 C 17/06
17/04
G 01 L 9/00
1/10
G 01 N 9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-02-1980 | KAVCIC |

EPA form 1503.1  06.78